# EUROPEAN PATENT SPECIFICATION

(11) **EP 2 555 883 B1**
(45) Date of publication and mention of the grant of the patent: **19.03.2014**
(21) Application number: 11712556.7
(22) Date of filing: 06.04.2011
(51) Int. Cl.: B08B 9/08, B29B 17/02, B29K 67/00

(54) **METHOD AND APPARATUS FOR REMOVING LABELS FROM CONTAINERS**
VERFAHREN UND VORRICHTUNG ZUR ENTFERNUNG VON ETIKETTEN VON BEHÄLTERN
PROCÉDÉ ET APPAREIL POUR RETIRER DES ÉTIQUETTES DE CONTENEURS

(30) Priority: 07.04.2010 IT MI20100583
(43) Date of publication of application: 13.02.2013
(73) Proprietor: Previero N. S.R.L., 22040 Anzano del Parco, Como (IT)
(72) Inventor: PREVIERO, Flavio, I-22040 Anzano del Parco (IT)
(74) Representative: Coloberti, Luigi
(86) International application number: PCT/EP2011/055327
(87) International publication number: WO 2011/124597

(56) References cited:
- DE-U1- 20 301 994
- JP-A- 57 089 924
- US-A- 4 209 344
- US-A- 5 115 987
- US-A- 5 143 308

## Description

### SECTOR OF THE INVENTION

This invention refers to a method and an apparatus for releasing and removing labels from containers, particularly to remove and separate labels from containers and bottles of plastic materials, by a continuous process, in which the labels are consisting of a strip of plastic material wrapped around and glued to the body of the container.

The invention is particularly, but not exclusively, aimed at removal of labels from PET bottles suitable to be crushed or cut and recycled to be reused as raw material; however, use of the method and apparatus according to the invention for both removal and separation of labels, and washing and removal of contaminants is not excluded.

### BACKGROUND OF THE INVENTION

Recycling of bottles or containers in plastic material, for example PET bottles to be used as recovery material, normally requires washing and removal of contaminants which have stuck to the bottles, particularly the labels.

The bottles normally are collected and sent to a recovery plant, where they are washed to remove the contaminants, including the labels, which are separated during the washing operation, both in continuous and discontinuous or batch.

Discontinuous or batch washing and a delabeling apparatus is described, for example, in US-A-4209344; washing and/or label removal by a continuous process are also described, for example, in EP-A-0558528 of the same applicant, in US-A-6.752.192 and in EP-A-1084016.

In discontinuous processes, according to US-A-4,209,344 a perforated drum is generally used, in which the bottles or containers with labels to be removed, are subjected to a stirring and rubbing action in a liquid bath, maintained at a high temperature, or into a vertical tank comprising a stirrer device. Apparatus and systems of this kind have been abandoned for some time now, since a large part of the volume of the machine is prevalently intended for containing the water bath, with consequent impossibility of achieving high working capacities.

In view of the enormous consumption of plastic bottles and containers, discontinuous apparatuses have been replaced by apparatuses of large dimensions, suitable for handling large quantities of material in a basically continuous process, performing both washing of the containers, removal of the contaminants and detachment and separation of the labels.

An apparatus of this kind basically consists of a large horizontal cylinder to rotate at relatively low speeds, in which the bottles or containers are subjected to a stirring action by rolling, in the presence of water and chemical substances suitable for dissolving the adhesive by which the labels are stuck outside the bottles or containers.

However, an apparatus of this kind, although it is suitable for handling large quantities of material, nevertheless requires extremely long process times, due to the weak mechanical action for rubbing and detachment of the labels. In order to partially overcome this problem, separation of the labels is performed by operating with an intense chemical action, at high temperatures of the water bath, in order to increase the effectiveness of the adhesive dissolving action and detachment of the labels; however, this involves a high energy consumption and increased costs for chemicals.

Other typical limits or problems of continuous processes consist in the need to subsequently separate the bottles from the labels, providing a suitable separation device downstream the washing apparatus; also, if this device is provided with means for retaining the labels, or separate outlets apertures, since the labels detached from the bottles spread out flat, they tend to block the outlets apertures, with a consequent need for expensive maintenance operations.

A method and an apparatus for the removal of labels are also known from JP-A-10-066894, according to which the use of a vertical tower filled with water is suggested, and in which a blade or screw type stirrer rotates.

The bottles and/or containers to be washed and the process water are simultaneously supplied from above, towards the bottom of the washing tower, maintaining the water at a high temperature, between 60° and 90°C, in order to assist the label detachment action. The bottles and/or containers with detached labels are both removed from the bottom of the washing tower, and the labels are separated from the flow of water into a sloping conveyor, positioned on one side.

In an apparatus of this kind, in addition to the high energy consumption for heating a large quantity of water, the mechanical action for detaching the labels performed by the stirrer is also once again relatively modest; separation of the bottles or containers from the labels occurs subsequently and requires specifically dedicated equipments.

### OBJECTS OF THE INVENTION

This invention aims to provide a new and different solution for detaching and separating labels from plastic bottles and/or containers, by which a strong mechanical action is mainly generated on the labels to be removed, in the presence of a water flow with a comparatively low flow rate, necessary for separation of the labels from the bottles, inside the same apparatus.

An object of the invention is therefore to provide a method and an apparatus, as specified above, by which it is possible to obtain detachment and automatic separation of the labels from bottles and/or containers, by an extremely simple solution, which does not require supplementary separation equipment or devices, or does not require any chemical action, typical of a conventional apparatus.

A further object of the invention is to provide a method and an apparatus for the detachment and separation of labels from plastic bottles and/or containers, as previously indicated which, if necessary, may also be used to perform washing of contaminants, without making any substantial change either to the method or the apparatus itself.

### BRIEF DESCRIPTION OF THE INVENTION

The above is made possible by a method according to claim 1, and by an apparatus according to claim 5.

The principle on which this invention is based consists in supplying bottles and/or containers from the bottom of a vertical screw feeder, towards an upper outlet, moving the bottles and/or containers upwards and subjecting them to a centrifugal action against scraping and frictional members inside the cylindrical body of the feeder, and simultaneously supplying a flow of water from above of the screw feeder, to drag the labels detached from the containers, downwards. In this way, there is simultaneously an automatic detachment action of the labels from the bottles and/or containers while the same bottles and/or containers are moving upwards, and an automatic separation action of the detached labels, which are dragged downwards by the water flow, while the rising bottles and/or containers are upwardly moving in the screw feeder.

The separated labels and the water then flow into a label collecting chamber underneath the inlet aperture for the bottles and/or containers into the vertical screw feeder, and then separated in an extremely simple way by suitable means, or collected in a storage tank.

The supply of bottles and/or containers into the vertical screw feeder and the supply of the dragging water for separation and entrainment of the labels may be performed with any means suitable for the intended purpose.

If the apparatus must operate to merely perform detachment and separation of the labels, it is possible to operate with a relatively reduced water flow rate, at the temperature of the water distribution network, or slightly higher, thereby allowing a considerable saving of energy; otherwise, if, in addition to the detachment of the labels, a washing and dissolving action of the adhesive which remains on the bottles and/or containers is also required, it is possible to supply higher quantities of washing water, at an appropriate temperature, possibly pre-mixed with reduced quantities of chemicals, implementing in this way the method and working of the apparatus.

Therefore, according to the present invention, a method for removing and separating labels from containers in plastic material has been provided, in which the labels are removed by a mechanical action in a vertically extending screw feeder, characterised by the steps of:
supplying the containers at a bottom side of the screw feeder allowing the containers to flow upwards from the bottom the screw feeder;
causing breakage and detachment of the labels from the containers by radially throwing the containers against frictional members inside the screw feeder, by centrifugal action of the screw feeder; and
separating detached labels from the containers by downwardly dragging the detached labels by a flow of water supplied from above of the screw feeder, leaving the flow of water with the separated labels to flow into a collection chamber underneath the inlet aperture for the containers, while the containers are moving upwards and towards an upper outlet.

Furthermore, an apparatus suitable for performing the method for removing and separating labels, and/or washing plastic containers by the method previously referred to, has been provided, in which the apparatus comprises:
a vertical screw feeder having a cylindrical body provided with an inlet aperture for the containers at a lower position, and an outlet for the containers at an upper position of said cylindrical body, said vertical screw feeder being conformed to upwardly move the containers from the inlet aperture to the outlet;
a number of frictional members for removing the labels from the containers, vertically extending inside the feeder between the inlet aperture and the outlet;
water supply means for supplying a flow of water into the screw feeder conformed and arranged beneath the outlet to direct the water flow from the top downwards the screw feeder; and
a label collecting chamber, in the position of the screw feeder underneath the inlet aperture for the containers.

### BRIEF DESCRIPTION OF THE DRAWINGS

These and further characteristics of the method and apparatus, according to the invention, will result in more detail from the description of a preferential embodiment, with reference to the drawings, in which:
Fig. 1 shows a generic plastic bottle, with a label;
Fig. 2 is a longitudinal sectional view of the apparatus according to the invention;
Fig. 3 is an enlarged detail of figure 2, showing the label collection chamber;
Fig. 4 is an enlarged detail of the cross-section according to line 4-4 of figure 2;
Fig. 5 is an enlarged detail of the cross-section according to line 5-5 of figure 2.

### DETAILED DESCRIPTION OF THE INVENTION

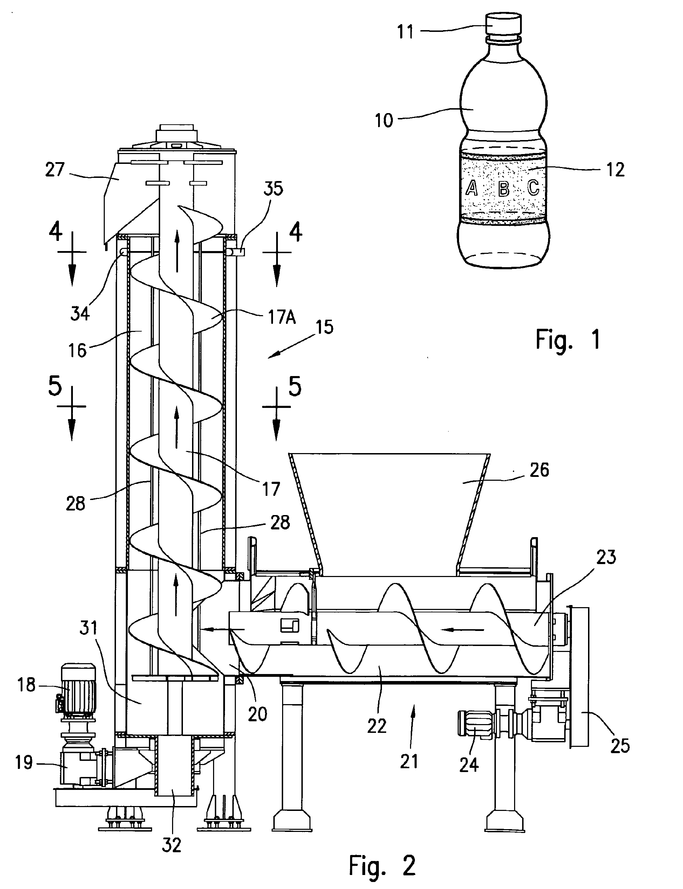

Figure 1 shows a generic plastic bottle, for example a PET bottle for containing water or a beverage; the bottle comprises a body 10 provided with a closure cap 11, and a label 12 consisting of a strip of plastic material wrapped around the bottle 10 and attached by an appropriate adhesive. As previously mentioned, once the beverage has been drunk, the empty bottle 10 with label 12 usually is thrown away and/or stored in special containers to be subsequently used as recovery row material. Therefore, before recycling the bottle 10, in addition to any washing operation, it is necessary to detach and remove the label 12, since it would be a pollutant for the recovery and reuse of the plastic material.

According to this invention, the detachment and separation of the labels 12 from bottles or containers 10, is performed by the apparatus shown in figure 2. The apparatus consists in a screw feeder 15, comprising a tubular body 16 of cylindrical shape, defining a delabeling chamber which upwardly extends along a vertical axis, inside which an Archimedean screw 17 rotates, operatively connected to an electric motor 18 by mechanical transmission 19.

The cylindrical body 16 of the screw feeder 15, in a lower position, is provided with a side inlet aperture 20 for the bottles 10 which are continuously supplied, for example by a horizontal screw feeder 21, or by any suitable supply system.

The apparatus comprises also a second feeder such as the screw feeder 22 which horizontally extends from the inlet aperture 20 for the bottles 10 on a side of the cylindrical body 16 of vertical screw feeder 15. Inside the horizontal feeder 21, an Archimedean screw 23 rotates operatively connected to an electric control motor 24 by a mechanical transmission 25; in figure 2, a bottle loading hopper is generically indicated by the reference number 26.

Again with reference to figure 2, the Archimedean screw 17 of the vertical feeder 15 extends upwards from the side inlet aperture 20 for the bottles 10, towards a side outlet 27 positioned at the upper end of the vertical feeder 15.

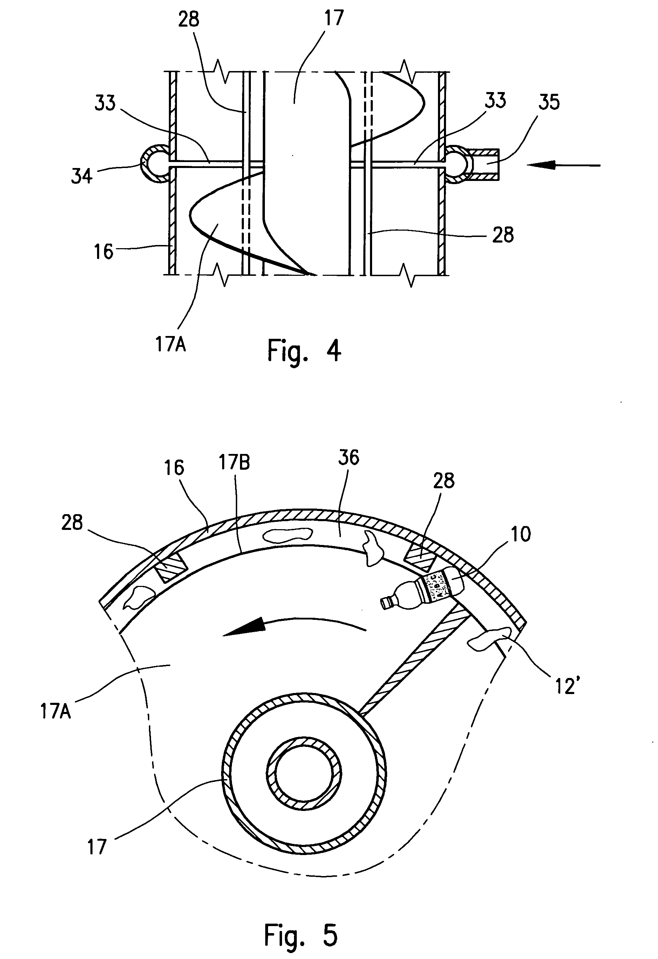

Inside the cylindrical body 16 of the vertical feeder 15 some scraping and frictional members are arranged, against which the bottles 10 are thrown while they are upwardly moved by rotation and the centrifugal action of the Archimedean screw 17. In the case shown, the frictional members consist in rectangular bars 28, angularly spaced apart, as shown more clearly in the cross-sectional view of figure 4, the bars 28 longitudinally extend on the internal surface of the tubular body 16, between the inlet aperture 20 and the outlet 27.

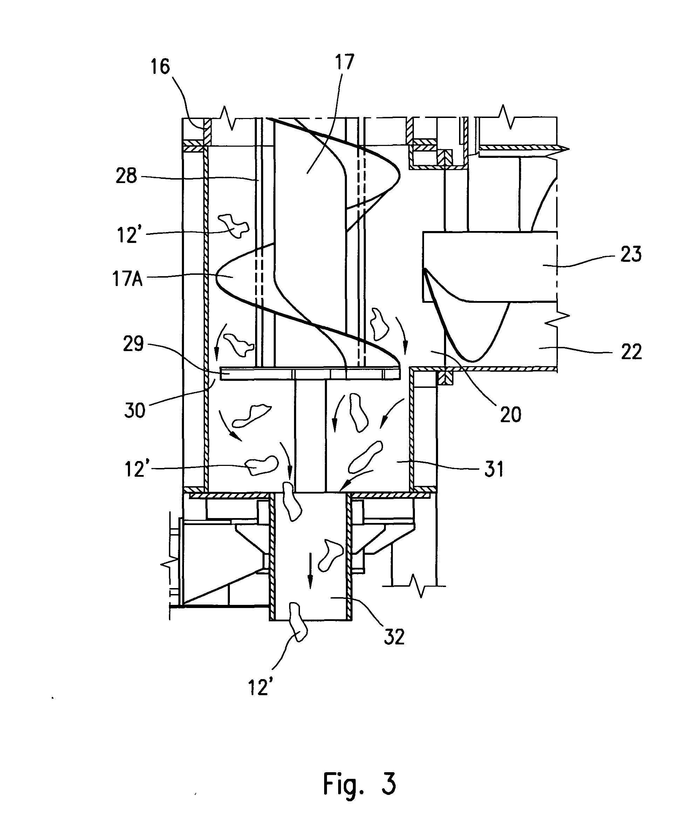

As shown in figure 2 and in the enlarged detail of figure 3, on the lower edge of the inlet aperture 20 for the bottles 10, the Archimedean screw 17 has a bottom disc 29 which prevents the bottles 10 from falling downwards; the bottom disc 29 has a diameter slightly lower than the internal diameter of the cylindrical body 16 of the vertical screw feeder 15, to provide an annular slot 30 to allow a downwards flowing of the water for dragging the labels 12' which have been detached and separated from the bottles 10 along the vertical screw feeder 15, as explained further on.

The flow of water which downwardly runs inside the cylindrical body 16, in turn downwardly drags the labels 12' into a collection chamber 31 underneath the screw 17 and the inlet aperture 20.

The labels 12' which have been detached from the bottles 10, and the dragging water, are discharged from the collection chamber 31 through an outlet pipe 32, then fed to a separation device, not shown, or to a storage tank.

The water for dragging the labels 12', is fed in counter-flow to the flow of bottles moving upwards, the water being supplied at the upper end of the vertical screw feeder 15, in a position just below the outlet 27 for the bottles 10; the water may be supplied in any suitable way, for example, as shown in figure 2 and in the enlarged detail of figure 4, the water for dragging the labels 12' may be supplied through slots or openings 33 in the cylindrical body 16 of the feeder 15, by an annular distributor 34 having inlet 35 for the water, connectable to the water supply system or to a pressurised water source; in substitution of the slots 33 and the annular distributor 34, it is possible to use any other system for supplying water or another process fluid.

Figure 5 shows a further characteristic and a particular view of the vertical screw feeder 15; in figure 5, as in the previous figures, the same reference numbers have been used to indicate similar or equivalent parts.

As may be seen from figure 5, between the peripheral edge 17B of the screw propeller 17A of the feeder 15 and the inside of the cylindrical body 16, a number of slots 36 are provided, which angularly extend between two adjacent frictional bars 28; the slots 36 serve to allow flow-off downwards of the water and labels 12' which have been detached from the bottles 10, running along the internal surface of the cylindrical body 16, towards the collection chamber 31 underneath.

As already mentioned, as an alternative to the use of the apparatus as separator for labels, the same apparatus may also be used to wash the bottles or containers 10.

This may be obtained by simply supplying a greater quantity of water, at an appropriate temperature, for example between 40°C and 90°C, suitably pre-mixed with a metered quantity of a chemical substance for assisting the removal of the adhesive, or removal of any polluting substance.

The working of the apparatus, in conformance with the method of this invention, occurs in the following manner: the bottles or containers 10 with labels 12 to be detached and separated, are introduced through the loading hopper 26 into the horizontal screw feeder 21 and continuously fed, through the inlet aperture 20, at the lower end of the Archimedean screw 17 of the vertical feeder 15.

The bottles or containers 10 entering the vertical screw feeder 15, due to the rotation and the strong centrifugal action performed by the Archimedean screw 17, are thrown towards the peripheral wall of the cylindrical body 16, against the frictional bars 28, which have a dual action: urging the bottles 10 to rise and move towards the upper outlet 27 under the thrust of the Archimedean screw 17, and performing a breaking and ripping action on the labels 12, increased by the rolling and frictional action between the same bottles while they are moving along the screw feeder 15.

In particular, figure 5 shows, on the right side, a bottle 10 thrust against a frictional bar 28 by the centrifugal action of the Archimedean screw 17, and labels 12' which have been detached.

From several tests it has been ascertained that an efficient breakage and ripping action of the labels 12 may be achieved by rotating the Archimedean screw 17 at a relatively high number of revolutions, for example between 40 and 60 revolutions per minute, with a tangential speed between 1.5 and 3 m/sec, depending on the diameter and rotation speed of the Archimedean screw 17.

From what has been stated and shown, it is clear that a method and an apparatus have been provided for removal of labels from plastic bottles and/or containers, in which a vertical screw feeder is used, duly conformed to allow a movement from the bottom upwards of a continuous flow of bottles and/or containers to be processed, and a strong mechanical action for the removal of the labels from the bottles or containers, in which the labels are dragged downwards into a collection chamber by water supplied in counter-flow to the bottles and/or containers while they are rising towards an outlet at the top end of the feeder.

What has been stated and shown with reference to the attached drawings is intended by way of example only of the general characteristics of the method and apparatus and a preferential embodiment.

Other changes or variants may therefore be made to the method and the same apparatus without departing from the claims.

## Claims

1. A method for removing and separating labels (12) from containers (10) in plastic material, in which the labels (12) are removed by a mechanical action in a vertically extending screw feeder (15), **characterised by** the steps of:
supplying the containers (10) at a bottom side of the screw feeder (15) allowing the containers (10) to flow upwards from the bottom of the screw feeder (15);
causing breakage and detachment of the labels (12) from the containers (10) by radially throwing the containers (10) against frictional members (28) inside the screw feeder (15), by centrifugal action of the screw feeder (15); and
separating detached labels (12') from the containers (10) by downwardly dragging the detached labels (12') by a flow of water supplied from above of the screw feeder (15), leaving the flow of water with the separated labels (12') to flow into a collection chamber (31) underneath the inlet aperture (20) for the containers (10), while the containers (10) are moving upwards and towards an upper outlet (27).

2. The method according to claim 1, **characterised by** discharging the water with the detached labels (12') from the collection chamber (31), and performing a subsequent separation step.

3. The method according to claim 1, **characterised by** performing a washing of the containers (10) inside the vertical screw feeder (15).

4. The method according to claim 3, **characterised by** performing the washing step of the containers (10), conjointly to the breakage and detachment of the labels (12) from the same containers (10).

5. An apparatus suitable for removing and separating labels, and/or for washing plastic containers (10), by the method of claim 1, **characterised by** comprising:
a vertical screw feeder (15) having a cylindrical body (16) provided with an inlet aperture (20) for the containers (10) at a lower position, and an outlet (27) for the containers (10) at an upper position of said cylindrical body (16), said vertical screw feeder (15) being conformed to upwardly move the containers (10) from the inlet aperture (20) to the outlet (27);
a number of frictional members (28) for removing the labels (12) from the containers (10), vertically extending inside the feeder (15) between the inlet aperture (20) and the outlet (27);
water supply means for supplying a flow of water into the screw feeder (15), conformed and arranged beneath the outlet (27) to direct the water flow from the top downwards the screw feeder (15); and
a label collecting chamber (31), in the position of the screw feeder (15) underneath the inlet aperture (20) for the containers (10).

6. The apparatuses according to claim 5, **characterised in that** the frictional members (28) comprise a number of angularly spaced apart bars, vertically extending between the inlet aperture (20) and the outlet (27).

7. The apparatus according to claim 5, **characterised in that** the cylindrical body (16) of the screw feeder (15) comprises a set of circular slots (36) for down flowing of water and detached labels (12'), between peripheral edges (17B) of the Archimedean screw (17A) and internal surface of the cylindrical body (16) of the screw feeder (15).

8. The apparatus according to claim 5, **characterised in that** the Archimedean screw (17A) of the screw feeder (15) is actuated to a rotational speed between 40 and 60 revolutions per minute, and conformed to provide a peripheral speed between 1.5 and 3 m/sec.

9. The apparatus according to claim 5, **characterised by** including a horizontal feeder (21) for the containers (10) operatively connected to the inlet aperture (20) of the vertical screw feeder (15).

10. The apparatus according to claim 9, **characterised in that** the horizontal feeder (21) is a screw feeder.

## Patentansprüche

1. Verfahren zum Entfernen und Abtrennen von Etiketten (12) von Behälter (10) aus Kunststoffmaterial, wobei die Etiketten (12) durch einen mechanischen Vorgang in einem vertikal verlaufenden Schneckenaufgeber (15) entfernt werden, **gekennzeichnet durch** die folgenden Schritte:
Zuführen der Behälter (10) auf einer unteren Seite des Schneckenaufgebers (15), wobei ermöglicht ist, dass die Behälter (10) von der Unterseite des Schneckenaufgebers (15) nach oben strömen;
Bewirken des Zerbrechens und Ablösens der Etiketten (12) von den Behältern (10) **durch** radiales Schleudern der Behälter (10) gegen Reibungsglieder (28) innerhalb des Schneckenaufgebers (15) **durch** Zentrifugalwirkung des Schneckenaufgebers (15); und
Abtrennen von abgelösten Etiketten (12`) von den Behältern (10) **durch** Reißen der abgelösten Etiketten (12`) nach unten **durch** einen Wasserstrom, der von oberhalb des Schneckenaufgebers (15) zugeführt wird, wobei der Wasserstrom mit den abgetrennten Etiketten (12') in eine Sammelkammer (31) unterhalb der Einlassöffnung (20) für die Behälter (10) fließen gelassen wird, während sich die Behälter (10) aufwärts und zu einem oberen Auslass (27) hin bewegen.

2. Verfahren nach Anspruch 1, **gekennzeichnet durch** Ablassen des Wassers mit den abgelösten Etiketten (12') aus der Sammelkammer (31) und Durchführen eines anschließenden Schritts des Abtrennens.

3. Verfahren nach Anspruch 1, **gekennzeichnet durch** Durchführen eines Waschens der Behälter (10) innerhalb des Schneckenaufgebers (15).

4. Verfahren nach Anspruch 3, **gekennzeichnet durch** Durchführen des Schritts des Waschens der Behälter (10) gemeinsam mit dem Zerbrechen und Ablösen der Etiketten (12) von denselben Behältern (10).

5. Vorrichtung, die zum Entfernen und Abtrennen von Etiketten und/oder zum Waschen von Kunststoffbehältern (10) durch das verfahren nach Anspruch 1 geeignet ist, **dadurch gekennzeichnet, dass** sie Folgendes umfasst:
einen vertikalen Schneckenaufgeber (15) mit einem zylindrischen Körper (16), der mit einer Einlassöffnung (20) für die Behälter (10) an einer unteren Position und einem Auslass (27) für die Behälter (10) an einer oberen Position de zylindrischen Körpers (16) versehen ist, wobei der vertikale Schneckenaufgeber (15) zum Bewegen der Behälter (10) von der Einlassöffnung (20) nach oben zum Auslass (27) angepasst ist;
eine Anzahl von Reibungsgliedern (28) zum Entfernen der Etiketten (12) von den Behältern (10), welche vertikal innerhalb des Schneckenaufgebers (15) zwischen der Einlassöffnung (20) und dem Auslass (27) verlaufen;
Wasserzufuhrmittel zum Zuführen von Wasser in den Schneckenaufgeber (15), welche unterhalb des Auslasses (27) zum Leiten des Wasserstroms von oben den Schneckenaufgeber (15) nach unten angepasst und angeordnet sind; und
eine Etikettensammelkammer (31) in der Position des Schneckenaufgebers (15) unterhalb der Einlassöffnung (20) für die Behälter (10).

6. Vorrichtung nach Anspruch 5, **dadurch gekennzeichnet, dass** die Reibungsglieder (28) eine Anzahl von winklig voneinander beabstandeten Stäben umfassen, die vertikal zwischen der Einlassöffnung (20) und dem Auslass (27) verlaufen.

7. Vorrichtung nach Anspruch 5, **dadurch gekennzeichnet, dass** der zylindrische Körper (16) des Schneckenaufgebers (15) einen Satz kreisförmiger Schlitze (36) zum Hinunterströmen von Wasser und abgelösten Etiketten (12`) zwischen Umfangskanten (17B) der archimedischen Schnecke (17A) und der Innenfläche des zylindrischen Körpers (16) des Schneckenaufgebers (15) umfasst.

8. Vorrichtung nach Anspruch 5, **dadurch gekennzeichnet, dass** die archimedische Schnecke (17A) des Schneckenaufgebers (15) auf einer Drehgeschwindigkeit von 40 bis 60 Umdrehungen pro Minute betätigt ist und zum Vorsehen einer Umfangsgeschwindigkeit zwischen 1,5 und 3 m/s angepasst ist.

9. Vorrichtung nach Anspruch 5, **dadurch gekennzeichnet, dass** sie einen horizontalen Aufgeber (21) für die Behälter (10) enthält, der betriebsfähig mit der Einlassöffnung (20) des vertikalen Schneckenaufgebers (15) verbunden ist.

10. Vorrichtung nach Anspruch 9, **dadurch gekennzeichnet, dass** der vertikale Aufgeber (21) ein Schneckenaufgeber ist.

## Revendications

1. Procédé pour retirer et séparer des étiquettes (12) à partir de conteneurs (10) en matière plastique, dans lequel les étiquettes (12) sont retirées par une action mécanique dans un distributeur à vis s'étendant verticalement (15), **caractérisé par** les étapes consistant à :
fournir les conteneurs (10) à un côté inférieur du distributeur à vis (15) permettant aux conteneurs (10) de s'écouler vers le haut à partir du bas du distributeur à vis (15) ;
provoquer la rupture et le détachement des étiquettes (12) à partir des conteneurs (10) en jetant radialement les conteneurs (10) contre des organes de frottement (28) à l'intérieur du distributeur à vis (15), par une action centrifuge du distributeur à vis (15) ; et
séparer les étiquettes détachées (12') à partir des conteneurs (10) en traînant les étiquettes détachées (12') vers le bas par un écoulement d'eau fournie à partir du dessus du distributeur à vis (15), en laissant l'écoulement d'eau avec les étiquettes séparées (12') s'écouler dans une chambre de collecte (31) sous l'ouverture d'entrée (20) pour les conteneurs (10),
pendant que les conteneurs (10) se déplacent vers le haut et vers une sortie supérieure (27).

2. Procédé selon la revendication 1, **caractérisé par** l'évacuation de l'eau avec les étiquettes détachées (12') à partir de la chambre de collecte (31), et l'exécution d'une étape de séparation ultérieure.

3. Procédé selon la revendication 1, **caractérisé par** l'exécution d'un lavage des conteneurs (10) à l'intérieur du distributeur à vis vertical (15).

4. Procédé selon la revendication 3, **caractérisé par** l'exécution de l'étape de lavage des conteneurs (10), conjointement avec la rupture et le détachement des étiquettes (12) à partir des mêmes conteneurs (10).

5. Appareil adapté pour retirer et séparer des étiquettes, et/ou pour laver des conteneurs en plastique (10), par le procédé de la revendication 1, **caractérisé en ce qu'**il comprend :
un distributeur à vis vertical (15) ayant un corps cylindrique (16) pourvu d'une ouverture d'entrée (20) pour les conteneurs (10) à une position inférieure, et
une sortie (27) pour les conteneurs (10) à une position supérieure dudit corps cylindrique (16), ledit distributeur à vis vertical (15) étant conformé pour déplacer vers le haut les conteneurs (10) de l'ouverture d'entrée (20) à la sortie (27) ;
un nombre d'organes de frottement (28) pour retirer les étiquettes (12) à partir des conteneurs (10), s'étendant verticalement à l'intérieur du distributeur (15) entre l'ouverture d'entrée (20) la sortie (27) ;
un moyen d'alimentation d'eau pour fournir un écoulement d'eau dans le distributeur à vis (15), conformé et
agencé au-dessous de la sortie (27) pour diriger l'écoulement d'eau du haut vers le bas du distributeur à vis (15) ; et
une chambre de collecte d'étiquettes (31), à la position du distributeur à vis (15) sous l'ouverture d'entrée (20) pour les conteneurs (10).

6. Appareil selon la revendication 5, **caractérisé en ce que** les organes de frottement (28) comprennent un nombre de barres espacées angulairement, s'étendant verticalement entre l'ouverture d'entrée (20) et la sortie (27).

7. Appareil selon la revendication 5, **caractérisé en ce que** le corps cylindrique (16) du distributeur à vis (15) comprend un ensemble de fentes circulaires (36) pour l'écoulement vers le bas de l'eau et des étiquettes détachées (12'), entre des bords périphériques (17B) de la vis d'Archimède (17A) et une surface interne du corps cylindrique (16) du distributeur à vis (15).

8. Appareil selon la revendication 5, **caractérisé en ce que** la vis d'Archimède (17A) du distributeur à vis (15) est actionnée à une vitesse de rotation entre 40 et 60 tours par minute, et est conformée pour fournir une vitesse périphérique entre 1,5 et 3 mètres par seconde.

9. Appareil selon la revendication 5, **caractérisé en ce qu'**il comprend un distributeur horizontal (21) pour les conteneurs (10) relié de manière opérationnelle à l'ouverture d'entrée (20) du distributeur à vis vertical (15).

10. Appareil selon la revendication 9, **caractérisé en ce que** le distributeur horizontal (21) est un distributeur à vis.
